# EUROPEAN PATENT SPECIFICATION

(11) **EP 0 674 936 B1**
(45) Date of publication and mention of the grant of the patent: **11.11.1998**
(21) Application number: 95302009.6
(22) Date of filing: 27.03.1995
(51) Int. Cl.: B01D 53/14, B01D 53/46

(54) **A method for using aminofunctional silicon compounds for selective separation of gases**
Verfahren zur Anwendung von Amino-Silizium Verbindungen zur selektiven Gastrennung
Procédé d'utilisation de composants silice-aminofonctionnels pour la séparation sélective de gaz

(30) Priority: 30.03.1994 US 220345
(43) Date of publication of application: 04.10.1995
(73) Proprietor: DOW CORNING CORPORATION, Midland, Michigan 48686-0994 (US)
(72) Inventor: Starke, William Alfred, Saginaw, Michigan (US); Ziemelis, Maris Jazeps, Midland, Michigan (US)
(74) Representative: Spott, Gottfried, Dr.

(56) References cited:
- DE-A- 4 208 456
- US-A- 4 142 874
- DATABASE WPI Section Ch, Week 8109 Derwent Publications Ltd., London, GB; Class A97, AN 81-14688D & JP-A-55 165 109 ( NIPPON SEKIYU SEISE) , 24 December 1980

## Description

This invention provides a method of selectively removing certain gases from gas streams using aminofunctional silicon compounds.

Specifically, our method removes gases, such as carbon dioxide, sulfur oxides (SOₓ) and nitrogen oxides (NOₓ), from gas streams and addresses such processes as the separation of gas mixtures, gas purification and air pollution control.

Even though release of gases into the atmosphere can sometimes be beneficial, it generally creates an air pollution problem. "Air pollution" is defined as the presence in the atmosphere (or ambient air) of one or more contaminants of such quantity and duration as may be injurious to human, plant or animal life, public and private property or the conduct of business. This invention deals only with pollutants that are emitted as gases or aerosols. Further, this invention addresses the separation of pollutant gases from gas streams and not gases from other media. Obviously, the separation of pollutant gases leads one to the purification of gases as well.

Major air pollutants include (SOₓ), CO, CO₂, (NOₓ), hydrocarbons, photochemical oxidants, particulates, asbestos, mercury vapor, lead, polycyclic organic matter, fluoride compounds, chlorofluorocarbons, odors and the like. Normally, carbon dioxide is not considered a pollutant and, in fact, carbon dioxide plays a vital role in the earth's environment. It is a constituent in the atmosphere and, as such, is a necessary ingredient in the life cycle of animals and plants. The balance between animal and plant life cycles, as affected by the solubility of carbon dioxide in the earth's water, results in a carbon dioxide content in the atmosphere of about 0.03 vol%. However, carbon dioxide content of the atmosphere seems to be increasing as greater amounts of fossil fuels are burned. Carbon dioxide has increased in average atmospheric concentrations from 290 ppm before 1900 to 330 ppm in the 1950s. Very little visible solar radiation is absorbed by atmospheric carbon dioxide. However, carbon dioxide is opaque to certain bands of the earth's long-wave radiation. Thus, increases in atmospheric carbon dioxide decrease the amount of energy that the earth loses to space resulting in a higher surface temperature of earth. There is some evidence that the rate of carbon dioxide release to the atmosphere may be greater than the earth's ability to assimilate it. Such an increase could result in a warmer temperature at the earth's surface by allowing the short heat waves from the sun to pass through the atmosphere while blocking larger waves that reflect from the earth. If the earth's average temperature were to increase by several degrees, portions of the polar ice caps could melt causing an increase in the level of the oceans, air circulation patterns could change, thereby altering rain patterns to make deserts of farmland or vice versa.

Air pollution control methods today include five technical procedures: absorption, adsorption, condensation, chemical reaction and incineration. This invention deals with the procedure of chemical reactions, but not in the sense of decomposition as is currently used. Rather, our approach addresses the formation of useful chemical compounds which can be treated to give up the bound gases under controlled conditions. Suitable methods of chemical reaction of gaseous pollutants make them more easily collectable and, for example, nitrogen oxide can be decomposed to N₂ and O₂ in a catalytic device. Many odors and organic compounds can also be destroyed by strong oxidants such as KMnO₄, HNO₃ and hypochlorite solutions.

Other technologies exist for the removal of carbon dioxide from industrial process streams. The major ones use solutions of Na₂CO₃ or K₂CO₃ to form the respective bicarbonates or use ethanolamine to form ammonium carbonates (Girbotol Process). Since these methods are aqueous solution systems, a major disadvantage is severe corrosion of process equipment. Alternate methods use solvents that are capable of partially dissolving carbon dioxide, for example, sulfolane for the Sulfinol Process and methanol for the Rectisol Process, N-methyl-2-pyrollidone for the Purisol Process and propylene carbonate for the Fluor Process. However, these methods only work at high partial pressures of carbon dioxide. Since our invention is a non-aqueous process, it is expected that there will be reduced corrosion in the processing equipment. A further benefit is the process can be carried out at essentially atmospheric conditions.

Our invention introduces a method for selective separation of certain gases from contaminated gases. The method comprises contacting a contaminated gas with an aminofunctional silicon compound selected from A. silanes; B. siloxanes; C. mixtures of A. and B.; D. mixtures of A. and non-reactive organic fluids; E. mixtures of A. and non-reactive silicone fluids; F. mixtures of B. and non-reactive organic fluids; and G. mixtures of B. and non-reactive silicone fluids, for a time sufficient and at a temperature sufficient to reduce the contaminants in the contaminated gas. A. has the formula RₐSiR'₃₋ₐ; and B. has a formula selected from
a. (CH₃)₃SiO{(CH₃)₂SiO}ₓ{(CH₃)RSiO}_{y}Si(CH₃)₃,
b. (CH₃)₃SiO{(CH₃)RSiO}_{y}Si(CH₃)₃,
c. R(CH₃)₂SiO{(CH₃)₂SiO}ₓ{(CH₃)RSiO}_{y}Si(CH₃)₂R and
d. R(CH₃)₂SiO{(CH₃)RSiO}_{y}Si(CH₃)₂R,
wherein each R is a radical selected from radicals consisting essentially of (i) -R''NH_{1-b}Q_{b}R'''NHQ' or (ii) -R''NHQ wherein R'' and R''' are each selected from -(CH₂)_{z}-wherein z has a value of 2 to 4, 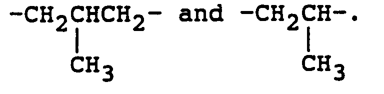 Each R' is selected from alkyl groups of 1 to 6 carbon atoms, phenyl and {(CH₃)₃SiO} and a has a value of at least one, b has a value of zero or 1, each Q and Q' is selected from hydrogen atom or an alkyl radical of 1 to 6 carbon atoms, wherein each x has a value of 1 to 500; each y has a value of 1 to 20 with the further proviso that the aminofunctional silicon compound before it is contacted with the contaminated gas, has a viscosity of 30,000 centistokes (mm²/s) or less at 25°C. This viscosity is not narrowly critical in that the limitation is applied to fluids which are pumpable. Generally, the aminofunctional silicon compound having a viscosity of 30,000 centistokes (mm²/s) at 25°C. or less are pumpable while those having higher viscosities are not readily pumpable.

This invention also provides a method for treating the aminofunctional silicon compound to retrieve the gas with which it has been previously reacted. This embodiment of the invention simply requires the aminofunctional silicon compound in its reacted form to be treated with heat under certain conditions, which treatment releases the bound gaseous material which can be recovered. This invention lends itself well to the purification of gases because of this simple treatment. It is further contemplated to use mixtures of A. and B., to use either of A. or B. or to use mixtures of them with non-reactive fluids, primarily as diluents, such as non-reactive, polymeric ethers or trimethylsiloxy endblocked polydimethylsiloxane fluids.

Thus, there is achieved a method for handling gaseous materials to separate them from other gaseous materials and recover them for further use. Such a method comprises (I) contacting a contaminated gas with an aminofunctional silicon compound selected from A. silanes; B. siloxanes; C. mixtures of A. and B.; D. mixtures of A. and non-reactive organic fluids; E. mixtures of A. and non-reactive silicone fluids; F. mixtures of B. and non-reactive organic fluids; and G. mixtures of B. and non-reactive silicone fluids, for a time sufficient and at a temperature sufficient to reduce the contaminants in the contaminated gas and to form a reacted silicon compound. A. has the formula RₐSiR'₃₋ₐ and B. has a formula selected from
a. (CH₃)₃SiO{(CH₃)₂SiO}ₓ{(CH₃)RSiO}_{y}Si(CH₃)₃,
b. (CH₃)₃SiO{(CH₃)RSiO}_{y}Si(CH₃)₃,
c. R(CH₃)₂SiO{(CH₃)₂SiO}ₓ{(CH₃)RSiO}_{y}Si(CH₃)₂R and
d. R(CH₃)₂SiO{(CH₃)RSiO}_{y}Si(CH₃)₂R,
wherein each R is a radical selected from radicals consisting essentially of (i) -R''NH_{1-b}Q_{b}R'''NHQ' or (ii) -R''NHQ wherein R'' and R''' are each selected from -(CH₂)_{z}- wherein z has a value of 2 to 4, 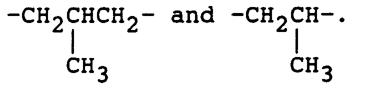 Each R' is selected from alkyl groups of 1 to 6 carbon atoms, phenyl and {(CH₃)₃SiO} and a has a value of at least one, b has a value of zero or one and each Q and Q' is selected from hydrogen atom or an alkyl radical of 1 to 6 carbon atoms, wherein each x has a value of 1 to 500; each y has a value of 1 to 20 with the further proviso that the viscosity of the aminofunctional silicon compound before it is contacted with the contaminated gas, has a viscosity of 30,000 centistokes (mm²/s) or less at 25°C., (II) thereafter, heating the reacted silicon compound for a time sufficient and at a temperature sufficient to release the bound gaseous material. In addition, if desired, a step (III) is carried out in which the desired gaseous material is recovered.

The key of our invention lies in the use of aminofunctional silicon compounds which have the ability to react with certain gases in a contaminated gas stream whereby certain gases are removed from the contaminated gas stream. For example, carbon dioxide reacts with aminofunctional silicon compounds to form carbamates whereby the carbon dioxide is chemically bound in the molecule, while certain sulfur oxides (SOₓ), such as SO₂ and SO₃, as well as certain nitrogen oxides (NOₓ), such as NO and NO₂, are believed to be complexed with the amine groups in our aminofunctional silicon compound.

The method of contacting aminofunctional silicon compounds is not critical, as long as the contact time is sufficient to remove the desired gas and as long as the temperature is sufficient to allow the desired reactions to proceed. Contact times can range from less than 1 hour (15 minutes) to several hours (4 hours). It is preferred that the contact time be as short as possible; yet it should be sufficient to remove the desired amount of gas.

Since one embodiment of this method is to retrieve the bound gaseous material from the reacted silicon compound and since this step is carried out using heat, it is desirable that the reaction for contacting the gaseous material be carried out under mild conditions. That is at a temperature of 120°C. or less and it is preferred that the reaction be performed at less than 80°C. It is most preferred that the reaction be carried out at less than 40°C., thus preventing the release of gaseous material during the reaction step.

The "contact" referred to in the claims only requires that the gaseous stream to be treated is contacted with our aminofunctional silicon compound. This can be achieved by sparging the gaseous stream into or through the aminofunctional silicon compound, which is our preferred method; but it could also include misting the aminofunctional silicon compound into the gaseous material, the gaseous material could be blown through a mist of the aminofunctional silicon compound or the aminofunctional silicon compound could be made gaseous before being mixed with the gaseous material to be treated. The significant point is the gaseous material and the aminofunctional silicon compound are brought into intimate contact and the aminofunctional silicon compound is of the type that can be misted at low temperatures.

It is contemplated that this invention will run as a continuous process or as a bulk operation. There does not seem to be any major problems with the particular type of process as regards the intimate contact of the materials. The actual process equipment and process type are more dependent on the type of aminofunctional silicon compound that is used, the cost of the process and the desired end result.

One critical aspect of our invention is the use of aminofunctional silicon compounds. As indicated above, the aminofunctional silicon compounds are those having the formulae of A. and B. mentioned above.

With regard to the silanes A. that are suitable for this invention, there can be used silanes such as RₐSiR'₃₋ₐ wherein R is a radical selected from radicals consisting essentially of primary or secondary amino substituted organic radicals. Preferably, R is selected from radicals consisting essentially of the formula -R''NH_{1-b}Q_{b}R'''NHQ' or -R''NHQ. R'' and R''' for purposes of this invention are each selected from -(CH₂)_{z}- wherein z has a value of 2 to 4 and isobutylene or isopropylene. Further, the value of a is at least one, the value of b is zero or one. R' is selected from alkyl groups of 1 to 6 carbon atoms, phenyl and {(CH₃)₃SiO} and specific examples of such silanes are: (CH₃)₃Si(CH₂)₃NH₂, (CH)₃Si(CH₂)₃NHCH₂CH₂NH₂, {(CH₃)₃SiO)₃Si(CH₂)₃NH₂, {(CH₃)₂SiO}₃Si(CH₂)₃NHCH₂CH₂NH₂, (CH₃)₂(C₆H₅)Si(CH₂)₃NHCH₂CH₂NH₂, 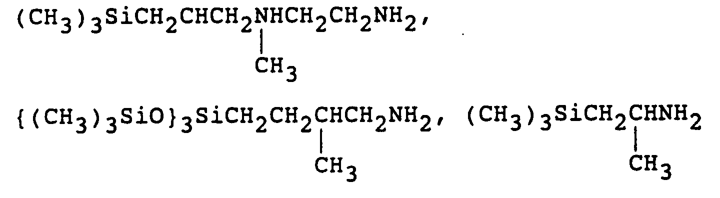 and the like.

It should be noted by those skilled in the art that the nitrogen atoms in the aminofunctional radicals are substituted by hydrogen atom, Q and Q'. For purposes of our invention, both Q and Q' are each selected from hydrogen atom and alkyl radicals of 1 to 6 carbon atoms such that either secondary or primary amino groups exist in the molecules. Most preferred for this invention are the silanes

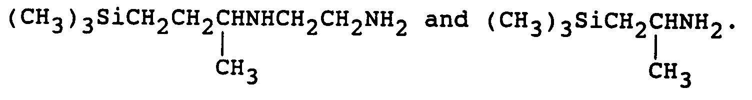

With regard to siloxanes B. that are useful in our invention, there can be used siloxanes such as those having the formula selected from
a. (CH₃)₃SiO{(CH₃)₂SiO}ₓ{(CH₃)RSiO}_{y}Si(CH₃)₃,
b. (CH₃)₃SiO{(CH₃)RSiO}_{y}Si(CH₃)₃,
c. R(CH₃)₂SiO{(CH₃)₂SiO}ₓ{(CH₃)RSiO}_{y}Si(CH₃)₂R and
d. R(CH₃)₂SiO{(CH₃)RSiO}_{y}Si(CH₃)₂R,
where R, R'', R''', Q and Q' are as previousely defined. For this invention, the values of x and y are 1 to 500 and 1 to 20 respectively, with the proviso that the viscosity of the siloxane before it is contacted with the contaminated gas has a viscosity of 30,000 centistokes (mm²/s) or less at 25°C.

Thus, for purposes of this invention, the aminofunctional radicals can be located along the chain of the siloxane, they can be located on the terminal ends of the siloxane or they can be located in both places at the same time on the molecule such as is shown for the siloxane of formula c. Further, the siloxanes can be copolymers and such copolymers contain, in addition to the aminofunctional siloxane units, units such as dimethylsiloxane, methylphenylsiloxane, diphenylsiloxane, phenyldimethylsiloxane and the like. When units of siloxane other than the aminofunctional siloxanes and the dimethylsiloxanes are present in the molecule, they are generally present in less than 10 mole percent.

The preparation of the siloxanes of our invention are well known to those skilled in the art and it is deemed unnecessary that detailed processes be set forth herein. The siloxanes of this invention can be prepared by the hydrosilylation of unsaturated siloxanes. This general reaction is illustrated by the reaction of a silane as follows: 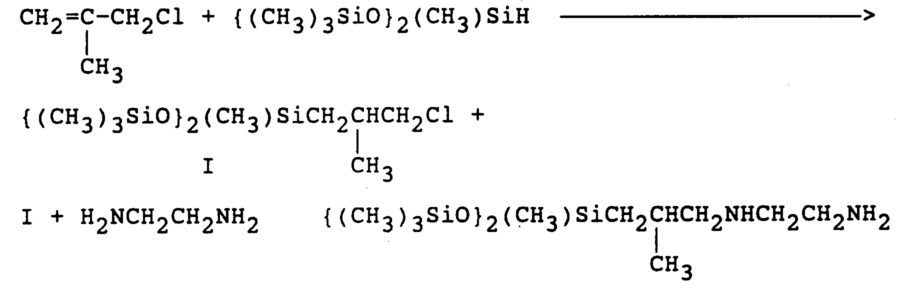 using platinum as the catalyst.

These siloxanes can also be prepared by the cohydrolysis of methyldialkoxyfunctionalaminoalkylfunctional silanes with other alkoxysilanes.

The method of this invention can be used in any situation in which pollutant gases are being separated from gases and in which the aminofunctional siloxanes or silanes will react preferentially with the pollution gases. "Contaminated gas" for purposes of this invention mean any combination of gases that contain at least one of carbon dioxide, sulfur oxides, nitrogen oxides or hydrogen sulfide. The air which surrounds us is an example of a contaminated gas.

Our method is especially useful in removing carbon dioxide from the air or other gases. The carbon dioxide reacts with the amines to form carbamates, ie.

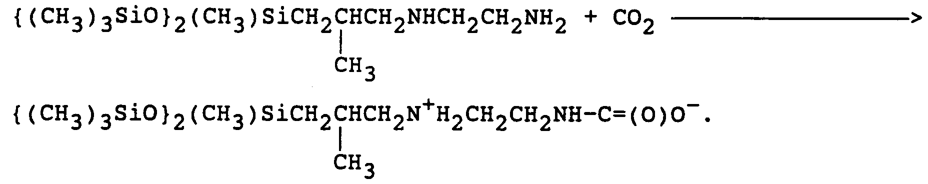

The reacted silicon compound can then be stored in this manner or it can be heated to recover the carbon dioxide by driving the carbon dioxide away from the silicon compound. The recovered carbon dioxide can be reclaimed as an essentially pure material; that is purer than industrial grade carbon dioxide.

Likewise, sulfur or nitrogen containing gases can be treated by our method to recover the various (SOₓ) and (NOₓ) containing materials respectively. Under certain conditions, H₂S, Cl₂, CO and other gases may also be recovered.

With regard to removal of carbon dioxide from air, it has been found useful to remove carbon dioxide from submarine air, manned aerospace vehicles and like confined environments.

Further, this method may be used for the selective absorption of carbon dioxide, H₂S, SO₂ which would allow our method to be used in scrubbers for treatment of gases from burning fossil fuels, waste water treatment facilities and other industrial processes.

Figure 1 depicts a continuous loop scrubber asembly used to perform the method of the present invention.

Figure 2 illustrates an alternate apparatus for carrying out this invention.

For quick reference to the figures, the following list of parts and components is helpful:

| | | | |
|---|---|---|---|
| 1. | continuous loop scrubber | 2. | distillation column |
| 3. | glass beads | 4. | air/CO₂ mixture |
| 5. | test fluid | 6. | enriched fluid |
| 7. | heated flask | 8. | nitrogen gas |
| 9. | liquid filled trap | 10. | soap bubble flowmeter (Hewlett-Packard) |
| 11. | inlet tube | 12. | tubing for gases and fluid |
| 13. | pump | 14. | air flow gas flow rotameter |
| 15. | CO₂ flow gas flow rotameter | 16. | sample port with septum |
| 17. | water inlet | 18. | water carry tubing |
| 19. | water outlet | 20. | heat mantle |
| 21. | glass flask | 22. | magnetic stirrer |
| 23. | magnetic stirrer bar | 24. | temperature sensor/regulator |
| 25. | thermometer | 26. | water condensers |
| 27. | constant temperature bath | 28. | thermometer |
| 29. | addition funnel | 30. | flask |
| 31. | paddle stirrer/flask | 32. | paddle stirrer/bath |
| 33. | vent port | 34. | sample port with septum |
| 35. | voltage reg. for motor | 36. | motor |
| 37. | temperature sensor | 38. | heater |
| 39. | support board | 40. | bubbler trap |
| 41. | fluid for bath | | |

### Example 1

Removal of Carbon Dioxide From a Carbon Dioxide/Air Mixture Using An Aminofunctional Siloxane.

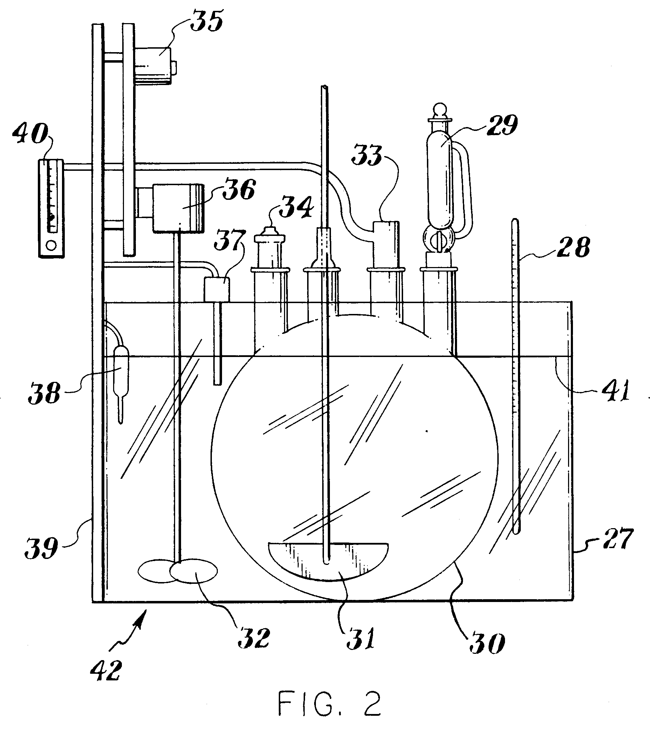

With regard to Figure 2, there is shown a 3 liter, 4-necked glass flask equipped with a stirrer, 125 ml addition funnel, a septum port for sampling and a vent port and bubbler. The flask was immersed in a constant temperature water bath maintained at 25°C. A Sensidyne Gastec™ Hand Pump, Model 800, was used to measure carbon dioxide concentration. The pump was equipped with Gastec™ Analyzer Tubes (number 2H) that are specific for measuring carbon dioxide. The siloxane that was used was (CH₃)₃SiO{(CH₃)₂SiO}₉₆(CH₃RSiO)₂Si(CH₃)₃ wherein R is -CH₂CH(CH₃)CH₂NHCH₂CH₂NH₂, having a viscosity of 130 centistokes (mm²/s) at 25°C. The glass flask, which contained air, was brought to equilibrium at 25°C. Solid carbon dioxide (0.68 g) was introduced into the flask, allowed to sublime and displace a portion of the air. The carbon dioxide concentration in the system was measured, showing good agreement with the added amount. The calculated amount was 12.2 vol% carbon dioxide. Then 107.4 g of the aminofunctional siloxane described above (2.5 x 10⁻² eq of -NHCH₂CH₂NH₂) was then added to the addition funnel and allowed to stir at room temperature. An immediate thickening of the fluid was observed and the bubbler showed a reduction of pressure in the system. After reaching equilibrium (30 min), the carbon dioxide concentration was measured, showing a reduction to 1.2 vol% carbon dioxide (> 90% reduction).

In comparison, a sample of (CH₃)₃SiO{(CH₃)₂SiO}₇₀Si(CH₃)₃ was used to replace the aminofunctional fluid in the above example. This material had a viscosity of 100 centistokes (mm²/s) at 25°C. The calculated carbon dioxide level was 9.0 vol% and the measured carbon dioxide level after treatment was 8.2 vol% (<9 % reduction).

The reacted aminofunctional silicone from the previous example was heated at 125°C. until the carbon dioxide was essentially liberated from the molecule and 96.1 g of this regenerated fluid was then added to the contents of the comparison sample. An immediate reduction in pressure was observed and the carbon dioxide concentration of the material was reduced to 1.2 vol% (>86% reduction).

### Example 2

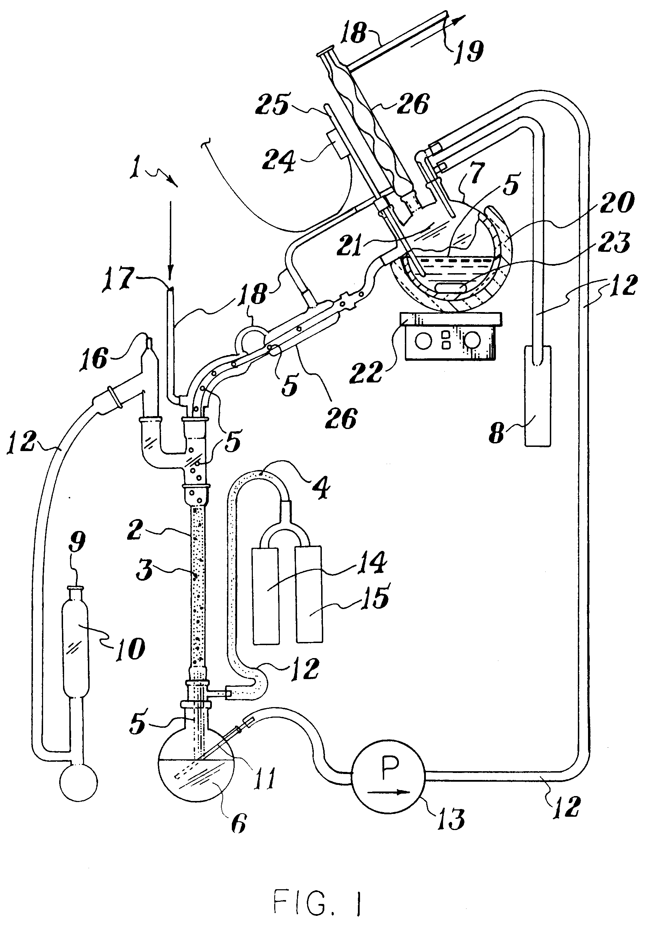

A continuous loop scrubber 1 as generically shown in Figure 1 was assembled. The apparatus consisted of a 30.5 cm (12 inch) column 2 packed with glass beads 3. A calibrated air/CO₂ mixture 4 was allowed to flow upward in the column 2. Test fluids 5 were allowed to flow downward, countercurrent to the gas mixture 4 to react with the carbon dioxide. The fluids 6, now enriched in carbon dioxide, were then pumped to a heated flask 7 which was continuously swept with nitrogen gas 8. The heated flask 7 served as a heat exchanger to liberate the bound carbon dioxide. The regenerated fluids 5 were then cooled and recycled through the column 2. Efficiency of the carbon dioxide removal was determined by measuring the carbon dioxide concentration exiting the top of the column 2, at sample port 16. For each sample run, there was used 700 ml of test fluid 5. The fluids were allowed to recycle for at least one theoretical residence time (see Table I).
A. Use of (CH₃)₃SiO{(CH₃)₂SiO}₇₀Si(CH₃)₃ of 100 Centistokes (mm²/s), A Comparison Example
   A CO₂/air mixture was passed through the column at a total gas flow rate of 126 cm³/min (11.6 vol% CO₂). When the fluid was fed countercurrent to the gas at 15 ml/min, the CO₂ concentration was reduced to 9.6 vol%, maintaining the heat exchanger temperature at 100°C. See Table I.
B. Use Of A Mixture Of The 100 Centistokes (mm²/s) Fluid Of Example 2 A. And The Aminofunctional Silicon Compound Of Example 1.
   Four hundred g of the aminofunctional silicon fluid was mixed with 400 g of the 100 centistokes (mm²/s) fluid. Seven hundred ml of this mixture, having an amine equivalent of 4053 g/eq, was introduced into the apparatus. The gas flow was set at 121.6 cm³/min (11.6 vol% CO₂). The test fluid was allowed to circulate through the system at 14.6 ml/min with the heat exchanger temperature set at 100°C. After 15 minutes of circulation, the carbon dioxide concentration was reduced to 6.8 vol% and 2.2 vol% after 75 minutes. (See Table I). At a heat exchanger temperature of 120°C., carbon dioxide concentrations of 2.4 to 2.6 vol% were measured.
C. The experiment in B. above, was repeated at different fluid flow rates. At a fluid flow rate of 25.2 ml/min, the carbon dioxide concentration was reduced from 11.8 to 5.4 vol%. When the fluid flow rate was reduced to 5.8 ml/min, a reduction in the carbon dioxide concentration to 2.8 vol% was measured, (See Table I). An analysis of the test fluid gave the following results:
   Amine neutral equivalent before the test:3936 g/eq.
   Amine neutral equivalent after the test:4179 g/eq.

**TABLE I**

| REF. NO. | FLUID | FLUID FLOWRATE (cm³/min) | HEAT EXCHANGER FLASK TEMP°C. | TIME (min) | CO₂ conc vol% |
|---|---|---|---|---|---|
| 1 | NONE | - | - | 0 - | 11.6 |
| 2 | A | 15.8 | 100 | 15 (44)* | 9.6 |
| 3 | A | 15.8 | 100 | 60 | 9.6 |
| 4 | NONE | - | - | 0 | 11.6 |
| 5 | B | 14.0 | 100 | 15 | 6.8 |
| 6 | B | 14.6 | 100 | 30 (48)* | 3.6 |
| 7 | B | 14.6 | 100 | 75 | 2.2 |
| 8 | B | 14.6 | 120 | 60 (48)* | 3.4 |
| 9 | B | 14.6 | 120 | 100 | 2.4 |
| 10 | B | 14.6 | 120 | 240 | 3.6 |
| 11 | NONE | - | - | 0 | 11.8 |
| 12 | B | 25.2 | 120 | 15 (28)* | 4.2 |
| 13 | B | 25.2 | 120 | 75 | 5.8 |
| 14 | B | 25.2 | 120 | 135 | 5.4 |
| 15 | B | 5.8 | 120 | 48 (120)* | 2.8 |

| | | | | | |
|---|---|---|---|---|---|
| *Denotes theoretical residence time to give one cycle of fluid | | | | | |
| A = 100 cs (mm²/s) at 25°C. (CH₃)₃SiO{(CH₃)₂SiO}ₓSi(CH₃)₃ B = 50/50 weight percent A and C C = (CH₃)₃SiO{(CH₃)₂SiO}96(CH₃RSiO)₂Si(CH₃)₃ wherein R is -CH₂CH(CH₃)CH₂NHCH₂CH₂NH₂, having a viscosity of 130 centistokes (mm²/s) at 25°C. | | | | | |

## Claims

1. A method for selective separation of gases or aerosols from contaminated gases comprising contacting a contaminated gas with an aminofunctional silicon compound selected from
A. silanes,
B. siloxanes,
C. mixtures of A. and B.,
D. mixtures of A. with non-reactive organic fluids,
E. mixtures of A. with non-reactive silicone fluids,
F. mixtures of B. with non-reactive organic fluids and,
G. mixtures of B. with non-reactive silicone fluids for a time sufficient and at a temperature sufficient to reduce the contaminants in the contaminated gas wherein
A. has the formula RₐSiR'₃₋ₐ;
B. has the formula selected from
a. (CH₃)₃SiO{(CH₃)₂SiO}ₓ{(CH₃)RSiO}_{y}Si(CH₃)₃,
b. (CH₃)₃SiO{(CH₃)RSiO}_{y}Si(CH₃)₃,
c. R(CH₃)₂SiO{(CH₃)₂SiO}ₓ{(CH₃)RSiO}_{y}Si(CH₃)₂R and
d. R(CH₃)₂SiO{(CH₃)RSiO}_{y}Si(CH₃)₂R,
wherein each R is a radical selected from (i) -R''NH_{1-b}Q_{b}R'''NHQ' and (ii) -R''NHQ wherein R'' and R''' are each selected from -(CH₂)_{z}- wherein z has a value of 2 to 4, 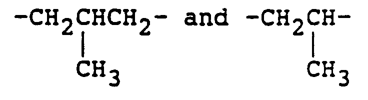 wherein each R' is selected from alkyl groups of 1 to 6 carbon atoms, phenyl and {(CH₃)₃SiO} and a has a value of at least one, b has a value of zero or 1, each Q and Q' is selected from hydrogen atom or an alkyl radical of 1 to 6 carbon atoms, wherein each x has a value of 1 to 500; each y has a value of 1 to 20 with the further proviso that the aminofunctional silicon compound before it is contacted with the contaminated gas, has a viscosity of 30,000 centistokes (mm²/s) or less at 25°C.

2. The method as claimed in claim 1 further comprising heating the reacted silicon compound for a time sufficient and at a temperature sufficient to release the bound gaseous material.

3. The method as claimed in claim 2 further comprising recovering the bound gaseous material after it becomes unbound.

## Patentansprüche

1. Verfahren zur selektiven Abtrennung von Gasen oder Aerosolen aus kontaminierten Gasen durch Inberührungbringen eines kontaminierten Gases mit einer aminofunktionellen Siliciumverbindung, die aus A. Silanen, B. Siloxanen, C. Gemischen von A und B, D. Gemischen von A. mit nicht reaktiven organischen Flüssigkeiten, E. Gemischen von A. mit nicht reaktiven Siliconflüssigkeiten, F. Gemischen von B. mit nicht reaktiven organischen Flüssigkeiten und G. Gemischen von B. mit nicht reaktiven Siliconflüssigkeiten ausgewählt ist, während einer ausreichenden Zeit und bei einer ausreichenden Temperatur, um die kontaminierenden Substanzen in dem kontaminierten Gas zu vermindern, wobei A. die Formel RₐSiR'₃₋ₐ. besitzt; B. eine Formel besitzt, die unter den folgenden Formeln ausgewählt ist:
a. (CH₃)₃SiO{(CH₃)₂SiO}ₓ{(CH₃)RSiO}_{y}Si(CH₃)₃,
b. (CH₃)₃SiO{(CH₃)RSiO}_{y}Si(CH₃)₃,
c. R(CH₃)₂SiO{(CH₃)₂SiO}ₓ{(CH₃)RSiO}_{y}Si(CH₃)₂R und
d. R(CH₃)₂SiO{(CH₃)RSiO}_{y}Si(CH₃)₂R,
worin jeder Rest R für einen Rest steht, der unter (i) -R''NH_{1-b}Q_{b}R'''NHQ' und (ii) -R''NHQ, worin R'' und R''' jeweils aus -(CH₂)_{z}-, worin z einen Wert von 2 bis 4 besitzt, 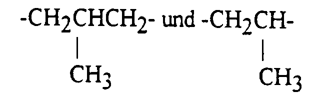 ausgewählt sind, ausgewählt ist, wobei jeder Rest R' aus Alkylgruppen mit 1 bis 6 Kohlenstoffatom(en). Phenyl und {(CH₃)₃SiO} ausgewählt ist, a einen Wert von mindestens 1 besitzt, b einen Wert von 0 oder 1 besitzt und jeder Rest Q und Q' aus Wasserstoffatomen und Alkylresten mit 1 bis 6 Kohlenstoffatom(en) ausgewählt ist, wobei jeder Index x einen Wert von 1 bis 500 besitzt, jeder Index y einen Wert von 1 bis 20 besitzt, wobei des weiteren gilt, daß die Viskosität der aminofunktionellen Siliciumverbindung vor dem Inberührungbringen derselben mit dem kontaminierten Gas bei 25°C 30.000 Centistoke (mm²/s) oder weniger beträgt.

2. Verfahren nach Anspruch 1, das des weiteren ein Erwärmen der umgesetzten Siliciumverbindung während einer ausreichenden Zeit und bei einer ausreichenden Temperatur zur Freisetzung des gebundenen gasförmigen Materials umfaßt.

3. Verfahren nach Anspruch 2, das des weiteren ein Gewinnen des gebundenen gasförmigen Materials, nachdem es freigesetzt wurde, umfaßt.

## Revendications

1. Un procédé pour la séparation sélective de gaz ou d'aérosols à partir de gaz contaminés, consistant à mettre en contact un gaz contaminé avec un composé du silicium à fonction amine choisi parmi
A. les silanes,
B. les siloxanes,
C. les mélanges de A. et B.,
D. les mélanges de A. avec des fluides organiques non réactifs,
E. les mélanges de A. avec des fluides de silicone non réactifs,
F. les mélanges de B. avec des fluides organiques non réactifs, et
G. les mélanges de B. avec des fluides de silicone non réactifs
pendant un temps suffisant et à une température suffisante pour réduire les contaminants contenus dans le gaz contaminé, dans lequel
A. a la formule RₐSiR'₃₋ₐ ;
B. a la formule choisie parmi
a. (CH₃)₃SiO{(CH₃)₂SiO}ₓ{(CH₃)RSiO}_{y}Si(CH₃)₃,
b. (CH₃)₃SiO{(CH₃)RSiO}_{y}Si(CH₃)₃,
c. R(CH₃)₂SiO{(CH₃)₂SiO}ₓ{(CH₃)RSiO}_{y}Si(CH₃)₂R et
d. R(CH₃)₂SiO{(CH₃)RSiO}_{y}Si(CH₃)₂R,
où chaque R est un radical choisi parmi (i) -R''NH_{1-b}Q_{b}R'''NHQ' et (ii) -R''NHQ où R'' et R''' sont choisis chacun parmi -(CH₂)_{z}- où la valeur de z est de 2 à 4, 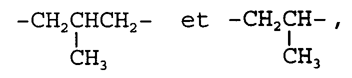 chaque R' est choisi parmi les groupes alkyles de 1 à 6 atomes de carbone, phényle et {(CH₃)₃SiO} et la valeur de a est d'au moins 1, la valeur de b est de zéro ou 1, chacun de Q et Q' est choisi parmi un atome d'hydrogène ou un radical alkyle de 1 à 6 atomes de carbone, chaque x a une valeur de 1 à 500 ; chaque y a une valeur de 1 à 20, avec la condition supplémentaire que le composé du silicium à fonction amine, avant sa mise en contact avec le gaz contaminé, ait une viscosité de 30 000 mm²/s ou moins à 25°C.

2. Le procédé tel que revendiqué dans la revendication 1, consistant de plus à chauffer le composé du silicium ayant réagi pendant un temps suffisant et à une température suffisante pour libérer la matière gazeuse liée.

3. Le procédé tel que revendiqué dans la revendication 2, consistant de plus à récupérer la matière gazeuse liée après sa libération.
